Europäisches Patentamt

European Patent Office

Office européen des brevets

(19)

(11) Numéro de publication: **0 484 211 B1**

(12) **FASCICULE DE BREVET EUROPEEN**

(45) Date de publication de fascicule du brevet: **26.07.95** (51) Int. Cl.⁶: **C03B 37/04**, C03B 37/095

(21) Numéro de dépôt: **91402850.1**

(22) Date de dépôt: **25.10.91**

(54) **Procédé et dispositif de production de fibres par centrifugation interne et application au fibrage de certains verres.**

(30) Priorité: **29.10.90 FR 9013354**

(43) Date de publication de la demande:
**06.05.92 Bulletin 92/19**

(45) Mention de la délivrance du brevet:
**26.07.95 Bulletin 95/30**

(84) Etats contractants désignés:
**AT BE CH DE DK ES FR GB IT LI LU NL SE**

(56) Documents cités:
**FR-A- 2 012 546**
**FR-A- 2 536 385**
**US-A- 4 185 980**

(73) Titulaire: **ISOVER SAINT-GOBAIN**
**18, avenue d'Alsace**
**F-92400 Courbevoie (FR)**

(72) Inventeur: **Bernard, Jean-Luc**
**51, rue André Oudin**
**Giencourt,**
**F-60600 Clermont (FR)**
Inventeur: **Furtak, Hans, Dr.**
**Im Oberkämmerer 35**
**W-Speyer Am Rhein (DE)**
Inventeur: **Berthier, Guy**
**236, rue de Froissy**
**F-60600 Clermont (FR)**
Inventeur: **Opozda, Michel**
**6, rue Becquerel**
**F-60100 Creil (FR)**

(74) Mandataire: **Menes, Catherine et al**
**SAINT-GOBAIN RECHERCHE 39, Ouai Lucien Lefranc**
**F-93300 Aubervilliers (FR)**

Rank Xerox (UK) Business Services
(3.10/3.09/3.3.3)

## Description

La présente invention se rapporte aux techniques de production de fibres à partir d'un matériau thermoplastique à point de fusion élevé par exemple du type verre ou basalte. Plus particulièrement l'invention concerne un développement aux procédés de fibrage dits par centrifugation interne dans lesquels le matériau à l'état fondu est déversé dans un centrifugeur tournant à grande vitesse dont la périphérique est percée d'un très grand nombre d'orifices au travers desquels le matériau s'échappe sous forme de filaments, lesquels sont ensuite cassés et éventuellement étirés par des courants gazeux concentriques émis parallèlement à l'axe de rotation du centrifugeur.

L'invention a également pour objet une application dudit procédé au fibrage de verres relativement durs pour lesquels la température correspondant à la viscosité adéquate au fibrage est de plus proche de leur température de dévitrification.

En dehors de quelques unités de fabrication utilisant des techniques de fibrage purement aérodynamiques, l'essentiel de la production de laine minérale se fait par centrifugation. Les premières techniques développées au début du siècle opéraient par déversement du matériau fondu sur un organe tournant à grande vitesse, le matériau fondu se détachant de l'organe tournant et étant pour partie transformé en fibres. Ces techniques de fibrage encore qualifiées de procédés par centrifugation externe dont un développement récent est présenté dans le brevet EP 0 059 152 peuvent être mises en oeuvre avec tout type de matériaux, notamment avec des matériaux à point de fusion particulièrement élevé tels que des verres basaltiques car l'organe tournant peut être refroidi par une circulation d'eau interne ou réalisé dans un matériau réfractaire n'étant pas muni d'orifices de perçage. D'autre part l'étirage est quasi instantané ce qui permet d'utiliser des matériaux ayant une vitesse de dévitrification très grande pour des températures voisines de la température de fibrage. De plus, le conditionnement du verre fondu peut ne pas être très élaboré, autrement dit ce procédé admet une fusion sans affinage voire à la rigueur avec quelques infondus et avec une composition non rigoureusement constante au cours du temps. Toutefois, il faut bien considérer que cette liberté est au prix d'une détérioration de la qualité des fibres et qu'il ne peut donc en être usé aussi largement qu'il serait souhaité. Par ailleurs, le flux de matériau fondu qui tombe sur le centrifugeur perturbe les conditions d'étirage de sorte que le traitement subi par deux filaments voisins peut varier fortement ce qui bien sûr se retrouve dans l'aspect final du produit qui comporte une grande diversité de fibres.

Un autre inconvénient est que la centrifugation externe conduit toujours à un taux important d'infibrés qui abaissent les qualités d'isolation thermique et acoustique des produits et obligent - pour une isolation donnée - à fabriquer des produits plus denses car comportant une part importante de particules ne concourant pas au pouvoir isolant. Accessoirement ces infibrés rendent la laine âpre au toucher et poussièreuse. Il en ressort que les techniques de centrifugation externe ne sont plus utilisées aujourd'hui que pour les compositions verrières à très haut point de fusion, qualifiées de verres durs pour lesquelles le domaine de fibrage est particulièrement étroit.

Pour des verres plus "nobles", et plus tendres, on utilise systématiquement les techniques de fibrage par centrifugation interne exposée plus haut qui conduit avantageusement à une quasi absence des infibrés, des fibres plus longues conférant au produit final une résilience accrue due à un meilleur enchevêtrement des fibres et à une meilleure précision quant au diamètre des fibres produites.

Mais pour procéder à une telle centrifugation interne, il est indispensable que le verre présente un comportement rhéologique adéquat. En premier lieu, le verre doit pouvoir se présenter dans un état tel qu'il soit étirable, le diamètre des orifices du centrifugeur étant de l'ordre du millimètre ou au plus fin de quelques dizièmes de millimètre alors que celui des fibres produites doit être de l'ordre de quelques microns. Les filaments qui s'échappent du centrifugeur doivent donc être amincis d'au minimun un facteur cent. Si la température du verre est trop élevée, ou autrement dit si le verre est trop fluide, il ne pourra se produire d'étirage et il se formera finalement, du fait de la tension superficielle, des gouttelettes et non des fibres (température de résolution en gouttes).

A ce premier bornage de définition du palier de formage vient s'ajouter le problème de la dévitrification, le verre ne devant pas être placé dans des conditions où il cristallise à une vitesse suffisamment grande compte tenu de son temps de séjour dans le centrifugeur, temps sans commune mesure avec le temps de contact entre le verre et l'organe tournant d'un fibrage par centrifugation externe. Le domaine des températures de travail est donc également limité par la température de liquidus (température correspondant à une vitesse nulle de cristallisation pour un verre en équilibre thermique), ou plutôt conformément à l'usage de cet art par la température supérieure de dévitrification (température correspondant à la dissolution complète des cristaux en 30 minutes, mesurée à partir d'un verre préalablement dévitrifié). Par la suite, nous employerons donc l'expression "domaine de travail" pour définir la gamme des températures

2

pour lesquelles un étirage en fibres est possible.

Avec les verres courramment utilisés en centrifugation interne, on a une température supérieure de dévitrification inférieure à la température correspondant à la viscosité la plus haute admissible pour un étirage, aussi le domaine de température de travail n'est-il pas ou très peu réduit par les problèmes de dévitrification.

Par contre, la situation est totalement différente avec par exemple les verres basaltiques ou d'autres verres à point de fusion particulièrement élevés. Pour ceux-ci, la température de dévitrification est bien supérieure à cette température correspondant à la viscosité la plus haute de sorte que le domaine de travail est limité par les températures de dévitrification et de résolution en gouttes. Et de plus, l'écart entre ces deux températures est souvent bien inférieur à une centaine de degrés voire à 50°C alors qu'un verre tendre a un domaine de travail de plus de 200-250°C.

Comme par ailleurs le verre est fondu à une température supérieure aux températures de travail, avec un écart d'autant plus grand que le verre est plus dur, ce qui va dans le sens d'une plus grande complication du problème, il doit donc se refroidir durant les opérations qui le conduisent du four à la paroi périphérique du centrifugeur. De ce fait, il est pratiquement impossible d'opérer avec un verre très exactement à une température donnée, pendant tout son temps de séjour dans le centrifugeur, il n'a pas été jusqu'à présent possible de remplacer pour ce type de verre par une technique de centrifugation interne la technique de centrifugation externe dont les inconvénients indiqués plus haut sont pourtant connus de longue date.

Et de plus, à ce problème fondamental du comportement rhéologique viennent s'ajouter d'autres problèmes d'ordre technologique cette fois. En effet, ces verres sont particulièrement corrosifs et il faut donc trouver un matériau pour la fabrication du centrifugeur qui résiste à l'attaque chimique d'autant plus rapide que la température et les débits sont particulièrement élevés ; de plus la taille des centrifugeurs, généralement comprise entre 200 et 1000 mm de diamètre, le grand nombre d'orifices de sortie et la forme étudiée en vue de résister aux efforts mécaniques intenses dus à la rotation et au fluage pendant des durées longues d'utilisation ne permettent pas d'envisager la réalisation de centrifugeur dans des alliages réfractaires par exemple au platine. Différents aciers réfractaires sont connus de la littérature de cet art mais tous ceux qui conviennent bien du point de vue mécanique ont une température d'utilisation maximale (sur une longue durée) de l'ordre de 1000°C, alors qu'une température de l'ordre de 1100-1200°C serait souhaitable.

La présente invention vise à l'amélioration des techniques de production de fibres minérales par le procédé de centrifugation interne en vue d'élargir la gamme des verres susceptibles d'être étirés de la sorte dans des conditions industrielles satisfaisantes. L'invention a également pour but un nouveau centrifugeur pour la mise en oeuvre du procédé selon l'invention.

Conformément à la revendication 1, le procédé selon l'invention consiste à verser le matériau à l'état fondu à l'intérieur d'un centrifugeur dont la bande périphérique est percée d'un très grand nombre d'orifices de sortie, la paroi interne de la bande périphérique étant à une température significativement plus élevée que la paroi externe. Le procédé selon l'invention procède ainsi avec un gradient important de température de l'intérieur à l'extérieur.

Selon les verres employés l'écart de température sera avantageusement choisi entre 50 et 300°C et de préférence entre 100 et 200°C, ceci pour une épaisseur de paroi de quelques millimètres, et généralement voisine d'environ 5mm.

Ce gradient de température est avantageusement tel que la température interne est bien supérieure à la température pour laquelle le matériau à fibrer commence à dévitrifier alors que la température extérieure est suffisamment basse pour que la viscosité du verre soit assez élevée au moment de l'étirage.

Avec un verre basaltique ou tout autre verre dont le domaine de températures de travail est particulièrement étroit, on va ainsi travailler avec, à l'intérieur du centrifugeur un verre dont la température est généralement supérieure à la température de résolution en goutte. Mais au moment où le filament de verre émerge par un des orifices de sortie du centrifugeur, sa température sera juste dans ce domaine de travail où la viscosité est adéquate pour un étirage. Sous réserve d'un conditionnement thermique du centrifugeur très précis obtenu par des apports de chaleur internes et externes idoines par exemple au moyen de brûleurs annulaires, l'invention permet ainsi de résoudre ce problème du conditionnement thermique des verres basaltiques.

Dans le procédé selon l'invention, l'étirage des filaments s'effectue juste à la périphérie du centrifugeur, donc à un moment où la viscosité adéquate est obtenue. Ainsi on peut étirer toute sorte de verre même si leur domaine de travail est pour ainsi dire inexistant, et ceci sans craindre qu'un bouchon ne se forme à l'intérieur du centrifugeur par une prise en masse du verre qui dévitrifie et il importe peu que la viscosité du verre augmente brutalement juste après l'émergence du filament.

Un avantage du procédé selon l'invention est aussi probablement lié au fait que dans la majeure partie de son trajet au travers des orifices, le verre est encore très fluide et a de ce fait une vitesse d'écoulement grande et conservée élevée pendant tout ce trajet. Donc, non seulement on écarte tout danger de dévitrification à l'intérieur du centrifugeur, mais de plus, les temps de séjour du verre dans les orifices sont de toute façon très courts ce qui là encore est favorable du point de vue de la dévitrification.

L'invention permet par exemple de travailler avec des roches naturelles notamment des basaltes qui ne nécessitent pas l'addition de fondants et de ce fait d'un prix de revient inférieur à celui d'un verre sodé et qui de plus sont avantageusement réfractaires et conduisent à l'obtention d'une laine dont la tenue à haute température est améliorée qui peut être employée pour l'isolation à haute température ou comme produits coupe-feu.

L'étirage peut être purement centrifuge et dans ce cas le centrifugeur est entouré d'un courant gazeux s'écoulant à vitesse peu élevée, servant au conditionnement thermique de la bande périphérique externe et des filaments auquel viennent éventuellement s'ajouter à plus grande distance des courants produits par une couronne annulaire et destinés à casser les fibres et à les entraîner vers la hotte de fibrage. On peut aussi opérer avec un étirage gazeux, venant s'ajouter à la force centrifuge, dû à l'action d'un courant gazeux s'écoulant à vitesse très élevée, ce courant gazeux jouant alors outre son rôle de conditionnement thermique celui d'un étirage par fluide.

Il est à noter que si un gradient thermique est nécessaire radialement, cela ne signifie, bien au contraire, qu'il n'y ait pas avantage à maintenir autant que possible les parois interne et externe chacune aussi isotherme que possible, les fibres issues de filaments s'échappant par les orifices du bas de la bande périphérique devant avoir une ≪ histoire ≫ aussi proche que possible de celles issues du haut de la bande périphériau.

Les auteurs de la présente invention ont également développé un centrifugeur utilisé dans la mise en oeuvre du procédé de l'invention, c'est-à-dire un centrifugeur susceptible de travailler avec un gradient de température selon l'épaisseur de la paroi de la bande périphérique. Ce premier objectif est satisfait avec un centrifugeur dont la bande périphérique est réalisée dans un matériau tel que la conductivité thermique, mesurée parallèlement à un rayon du centrifugeur est inférieure à 20 $Wm^{-1}C^{-1}$, à 1000°C et de préférence inférieure à 10 $Wm^{-1}C^{-1}$. La diffusivité thermique du centrifugeur selon l'invention, toujours mesurée parallèlement à un rayon et à 1000°C, est de préférence inférieure à 5 $10^{-6}$ $M^2s^{-1}$. Le matériau du centrifugeur doit de plus être à même de supporter une température intérieure particulièrement élevée compatible avec les températures de fusion de verres tels par exemple des basaltes naturels. Ces températures étant supérieures à 1000°C, c'est-à-dire à la limite actuelle d'utilisation des aciers réfractaires, les auteurs de la présente invention se sont tournés vers les matériaux céramiques.

Dans l'étude des matériaux susceptibles d'être utilisés dans ce but, plusieurs critères sont à prendre en compte. En premier lieu, il est indispensable que la céramique ne soit pas corrodée en raison d'une oxydation par le matériau fondu quel que soit celui-ci et donc notamment même s'il s'agit d'un matériau particulièrement corrosif du type verre basaltique et/ou laitier de hauts fourneaux. La résistance mécanique de la pièce doit être également aussi grande que possible, même si de toute façon il est bien connu que les céramiques présentent généralement une ténacité environ dix fois inférieure à la ténacité des métaux. Enfin la résistance aux chocs thermiques doit être élevée, autrement dit le coefficient de dilatation de la pièce doit être aussi réduit que possible.

Ce dernier point met immédiatement en évidence le problème du choix de la liaison entre les parties en céramique du centrifugeur et les parties métalliques telles que les pièces d'accouplement à l'arbre moteur plaçant le centrifugeur en rotation, ces parties s'échauffant obligatoirement, et donc se dilatant même s'il est possible de maintenir leur température à seulement quelques centaines de degrés.

De multiples tests ont été effectués sur des matériaux céramiques tous connus pour supporter des températures d'utilisation supérieures à 1000°C, en comparant leur performance sur différents critères particulièrement critiques dans le cas d'un centrifugeur de fibrage qui sont notamment la capacité à résister aux chocs thermiques (l'arrêt de la coulée de verre fondu pouvant parfois se produire de façon imprévisible entraînant une diminution brutale des apports thermiques), une résistance mécanique élevée (le centrifugeur est soumis à des efforts mécaniques intenses du fait de sa vitesse de rotation, qui de plus est de longue durée) et comme indiqué précédemment une tenue satisfaisante à la corrosion par les verres.

Parmi les céramiques monolithes, dont l'avantage de base est la possibilité d'une mise en oeuvre par frittage, technique bien connue des hommes de l'art, les auteurs de la présente invention ont finalement écarté les céramiques à base d'oxyde de chrome pourtant couramment utilisées dans les fours verriers mais qui ne conviennent pas en raison de leur mauvaise tenue aux chocs thermiques. D'autres céramiques telles que la mullite, la cordierite ou le titanate d'aluminium présentent des résistances mécaniques très insuffisantes. Le carbure de silicium ne donne pas non plus satisfaction car sa résistance aux chocs thermiques s'avère insuffisante. Pourtant très similaire au carbure de silicium par nombre de ses différentes caractéristiques, la famille du nitrure de silicium est finalement apparue aux auteurs de la présente le seul matériau convenable pour des pièces monolithes, sous réserve d'opérer en prenant un certain nombre de précautions qui seront énumérées plus loin.

Les céramiques au nitrure de silicium utilisées sont de couleur grise. On a notamment utilisé du nitrure de silicium ou des dérivés de celui-ci comme le SIALON répondant par exemple à la composition chimique suivante, exprimée en volume :

| Si | 49,4 % |
|---|---|
| Al | 4,2 % |
| Y | 7,25 % |
| O | 4 % |
| N | 35 % |
| Fe | < 2000 ppm |
| Ca + Mg | < 1000 ppm |

D'autres nitrures de silicium peuvent être également utilisés.

La pièce est obtenue par exemple par frittage. On utilise de préférence des céramiques non poreuses, dont la densité apparente est aussi proche que possible de leur densité maximale théorique ce qui conduit à des pièces moins facilement corrodées. Une telle céramique résiste très bien à l'oxydation par l'oxygène de l'air. Ce bon comportement s'explique par la formation d'une couche protectrice de silice à la surface de la pièce en céramique due à une oxydation superficielle. Avec des verres fondus, il est plus particulièrement avantageux de travailler avec une matière fondue dont la composition est relativement acide, c'est-à-dire à teneur en éléments acides comme l'alumine, le bore, la silice, le phosphore relativement élevée, de manière à limiter les phénomènes de corrosion.

Une autre catégorie de matériaux céramiques étudiée est celle des composites à matrice céramique et renforts fibreux qui présentent une tenacité notablement accrue par rapport à celle des céramiques monolithes. Le choix s'est porté plus particulièrement sur des céramiques SiC-SiC ou SiC-C, comportant une matrice en carbure de silicium renforcée par des fibres elles-mêmes en carbure de silicium (SiC-SiC) ou en carbone (SiC-C). Pour plus de détails sur ces matériaux, il est renvoyé par exemple à l'article de Monsieur Alain LACOMBE, intitulé "Les matériaux céramiques à matrice céramique" et publié dans le numéro de juin 1989 de la revue "Matériaux et Techniques". La pièce est réalisée par imprégnation par craquage d'un gazeux précurseur céramisé lors du dépôt dans une préforme obtenue par un empilement au contact de couches de tissu en fibres de carbure de silicium ou de carbone. Des technologies similaires à celles développées pour les composites polymères permettent la fabrication industrielle de telles pièces, y compris selon des diamètres relativement grands et par exemple supérieurs à 600 mm.

On peut noter que le matériau céramique utilisé présentant une tendance au fluage très faible par rapport à celle des matériaux métalliques aux températures ici utilisées, la forme du centrifugeur peut être quelque peu simplifiée et plus arrondie car même avec une vitesse de rotation élevée on reste généralement à des niveaux de contraintes ne dépassant pas la limite élastique du matériau. Les fibres de renfort permettent de générer un mécanisme absorbeur d'énergie qui limite la propagation des micro-fissures et autorise une certaine déformation élastique. Une telle céramique peut opérer dans des conditions non oxydantes à une température supérieure à 1200°C pour le SiC-SiC, et à 1400°C pour le SiC-C. Les orifices par lesquels s'échappe le verre peuvent être obtenus par perçage au laser.

Avec une céramique SiC-SiC, on a matériau tout particulièrement remarquable par sa ténacité de l'ordre de 30 MPa $\sqrt{m}$ qui lui confère une bonne tenue au choc thermique. Mis en contact avec un verre à l'oxygène ou l'oxygène de l'air, le carbure de silicium s'oxyde et il se forme comme dans le cas de nitrure de silicium une couche protectrice passive de silice.

Il doit être toutefois noté que ce phénomène de passivation n'est pas entièrement neutre et qu'il amène à sélection des formulations verrières particulières. En premier lieu, la silice peut être solubilisée par le verre et il faut donc éviter que celui-ci ne lessive à la longue le centrifugeur.

Nous avons indiqué plus haut la possibilité d'un perçage par un laser. Il s'est avéré que ce mode de perçage laisse une surface parfaitement lisse avec un tout petit nombre de fibres mises à nu dont la dégradation lors du passage du filet de verre fondu est étonnamment limitée en profondeur bien que les fibres aient une résistance à la corrosion moindre que celle de la matrice. De ce fait, il suffit d'opérer initialement avec des orifices qui sont percés à un diamètre légèrement plus petit que celui voulu et après un élargissement des orifices qui se produit dans les premiers instants de la coulée, on constate que le diamètre des orifices reste constant et qu'il n'y a donc pas usure rapide du centrifugeur.

Une autre caractéristique remarquable des céramiques SiC-SiC est leur conductivité thermique beaucoup plus faible que celle des aciers réfractaires à laquelle vient s'ajouter un coefficient de diffusivité très faible qui accompagne une inertie thermique assez faible due à une densité qui est seulement de l'ordre de 2,5. Dans l'épaisseur, donc dans le plan perpendiculaire aux plans des couches de tissu, on mesure ainsi pour une conductivité thermique de l'ordre de 4 à 5 $Wm^{-1}C^{-1}$ alors que pour une même température de 1000°C cette conductivité thermique est de l'ordre de 22 $Wm^{-1}C^{-1}$ pour un acier réfractaire utilisé pour les centrifugeurs traditionnels, aciers réfractaires qui sont pourtant de très mauvais conducteurs thermiques comparés aux aciers ordinaire. Accessoirement cette faible densité signifie que les centrifugeurs ainsi réalisés sont remarquablement légers d'où des efforts moindres à fournir au niveau de l'arbre moteur et des organes de montage. Mais si on revient au comportement thermique, on constate qu'une céramique SiC-SiC convient tout particulièrement à la mise en oeuvre du procédé selon l'invention dans la mesure où elle n'est pas véritablement tendance à homogénéiser sa température, même après un temps relativement long. On peut donc opérer avec un gradient de température qui évolue peu et qui peut donc être maintenu sans devoir surchauffer la partie interne du centrifugeur.

Un aspect négatif de ce comportement thermique particulier est qu'il est particulièrement difficile de préchauffer le centrifugeur lors de la mise en route du processus de fibrage. Pour cette raison, un dispositif de fibrage pour la mise en oeuvre du procédé selon l'invention comporte un centrifugeur et des moyens de chauffage. Dans ce sens, il a été trouvé qu'un chauffage isotherme sur toute la hauteur de la bande périphérique, mais non selon l'épaisseur, peut être obtenu au moyen d'un brûleur annulaire de préférence à plusieurs jets divergents dirigés vers la paroi intérieure de la bande périphérique et de brûleurs externes éventuellement complété par une ou plusieurs torches oxyacétyléniques, le chauffage devant être contrôlé de façon continue par exemple au moyen d'un pyromètre optique de manière à éviter toute surchauffe. Le préchauffage par brûleur interne permet de diminuer le nombre de zones se trouvant en traction, plus particulièrement au niveau de tous les orifices de perçage.

Les céramiques à matrice en carbure de silicium renforcée par des fibres de carbone sont également tout particulièrement avantageuses, leurs performances du point de vue de leur tenue à haute température, leur ténacité, leur conductivité thermique et leur mise en oeuvre étant très comparables, voire légèrement supérieures à celles des céramiques renforcées par des fibres de carbone sont de plus de bons conducteurs électriques ce qui permet éventuellement un chauffage par induction électromagnétique. Il est toutefois avantageux de prévoir une protection du centrifugeur, par exemple du type céramisation, avec une couche mince de carbure de silicium, ou toute autre couche équivalente, couche qui va avantageusement protéger les fibres mises à nu. Si le verre choisi est suffisamment réducteur, on peut éventuellement se passer de ce traitement protecteur de céramisation mais en procédant au préchauffage du centrifugeur par des brûleurs émettant des gaz réduits.

Un dernier point étudié est celui de la liaison entre la partie en céramique et les indispensables parties métalliques du centrifugeur qui doit bien d'une façon ou d'une autre être connecté à son arbre moteur. Cette liaison peut être par exemple assurée en bloquant le rebord plat de la pièce céramique entre deux brides métalliques fixées l'une à l'autre, métal contre métal, et en interposant entre la pièce en céramique et les brides métalliques des joints souples par exemple sous forme de feutres en fibres d'alumine ou autres fibres réfractaires ou sous forme de papiers exfoliés en graphite. Cette fixation souple autorise les glissements relatifs entre les pièces métalliques qui se dilatent énormément et la partie céramique qui elle ne se dilate quasiment pas. Ce dispositif de liaison est complété par un dispositif de centrage qui peut être avantageusement constitué par un ensemble de 3 plots en céramique portés par l'une des brides métalliques, plots qui viennent se positionner dans des logements oblongs radiaux ménagés sur le rebord de la pièce céramique et espacés régulièrement à 120°.

D'autres détails et caractéristiques avantageuses de l'invention ressortent de la description faite ci-après en référence aux dessins annexés qui représentent :

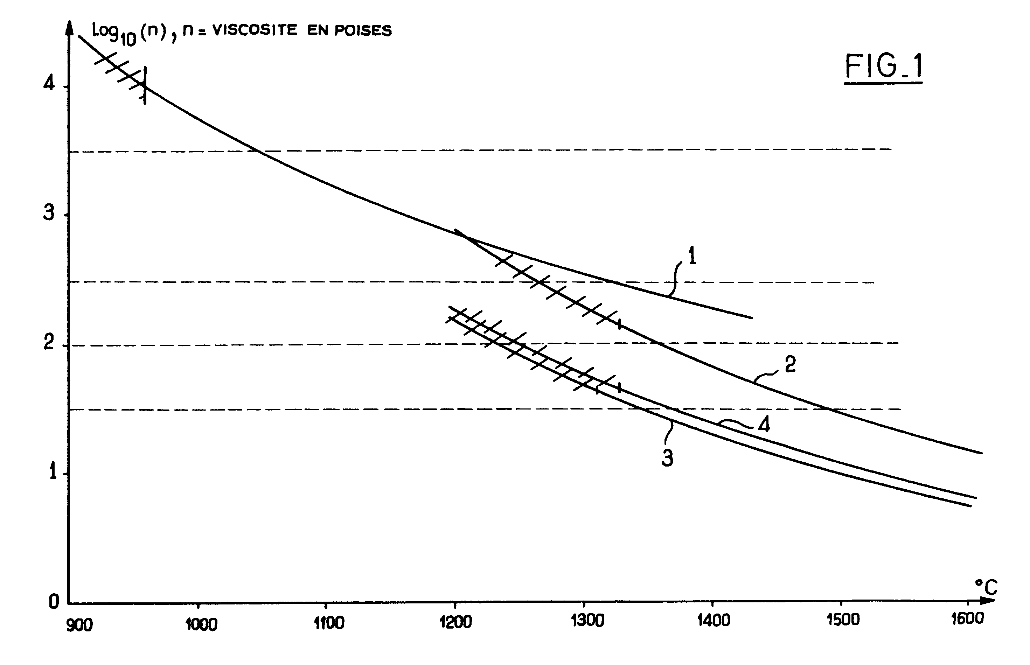

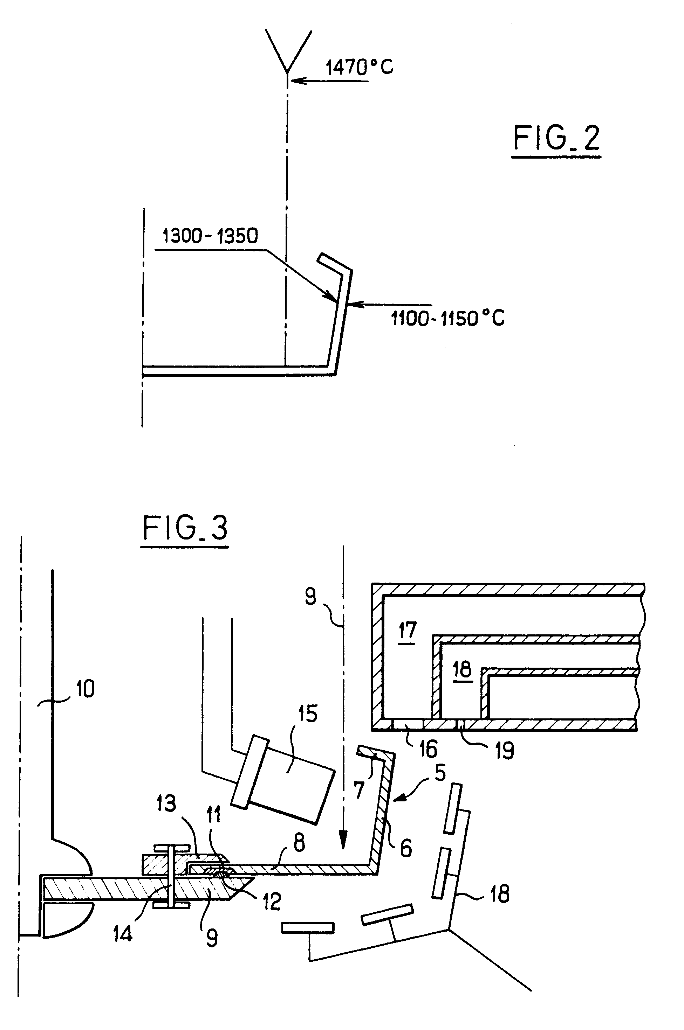

.  **figure 1** : les courbes viscosité-température des différents verres,
.  **figure 2** : un schéma illustrant le procédé de fibrage selon l'invention,
.  **figure 3** : une demi-vue schématique d'un centrifugeur selon l'invention.

L'industrie de la fibre d'isolation produit essentiellement deux types de produits, la laine de verre et la laine de roche, chacun de ces types étant bien sûr décliné selon un très grand nombre de variantes. De façon typique, la laine de verre est obtenue à partir d'une composition verrière qui entre dans les limites suivantes :

| | |
|---|---|
| SiO$_2$ | 61-66 (pourcentage pondéral) |
| Na$_2$O | 12-17 |
| Al$_2$O$_3$ | 2-5 |
| K$_2$O | 0-3 |
| CaO | 6-9 |
| B$_2$O$_3$ | 0-7,5 |
| MgO | 0-5 |
| Fe$_2$O$_3$ | inférieur à 0,6 |

Ces limites ne sont pas toujours très strictes et que d'autres constituants peuvent également entrer en ligne de compte, notamment sous forme de trâces. La teneur en silice relativement élevée par rapport à celle des autres verres évoqués dans ce mémoire implique une teneur élevée en fondants, tels que la soude ou le bore. Or la soude (et à plus forte raison le bore) est un constituant relativement onéreux, le coût de la composition pouvant être de plus notablement accru par des constituants tels que les oxydes de bore. De plus un verre d'une telle composition est plastique au-delà de 400-500°C ce qui limite ses possibilités d'emploi.

Par contre quand on observe la courbe viscosité-température d'un tel verre, référencée en 1 à la figure 1, on constate que la viscosité est comprise entre 300 et 3000 poises lorsque la température est elle-même comprise entre environ 1050 et 1300°C. Sur cette figure, on a d'autre part hachuré les domaines de températures inférieures aux températures supérieures de dévitrification des verres donnés. D'autre part la température supérieure de dévitrification et hors de ce domaine (960°C). Le domaine de travail est donc particulièrement étendu et ces verres se prêtent donc tout particulièrement bien à une transformation en fibres car ils peuvent être travaillés pendant des durées relativement longues avec des conditions d'étirage bien optimisées qui conduisent à des qualités de fibres particulièrement élevées, notamment en considération des qualités thermiques et mécaniques, qualités essentielles que l'on cherche à obtenir lors de la fabrication d'un produit isolant.

Le second type de produit est la laine de roche, ainsi appelée car souvent produite à partir de roches naturelles du type basalte encore que d'autres compositions notamment des produits dérivés de l'industrie sidérurgique tels que les laitiers de hauts fourneaux soient également utilisés. Ces composition verrières obtenues sans ajout notamment de soude et de ce fait moins onéreuses répondent par exemple aux compositions suivantes exprimées en pourcentages pondéraux, les références 2, 3 et 4 renvoyant aux courbes correspondantes viscosité-température proposées à la figure 1 où sont représentées en abscisses les températures et les ordonnées les logarithmes décimaux des viscosités exprimées en poises (1 poise = 1 dPas).

| | cas général | (2) | (3) | (4) |
|---|---|---|---|---|
| SiO$_2$ | 40-54 | 52,0 | 44,5 | 46,6 |
| Na$_2$O | 0-5 | 4,4 | 4,2 | 3,2 |
| Al$_2$O$_3$ | 8-18 | 16,9 | 14,7 | 13,7 |
| K$_2$O | 0-2 | 0,6 | 0,9 | 1,5 |
| CaO | 7-42 | 7,6 | 10,5 | 10,3 |
| MgO | 3-11 | 7,3 | 8,9 | 9,1 |
| Fe$_2$O$_3$ | 0-17 | 10,1 | 12,5 | 12,6 |
| Divers | | 1,3 | 3,8 | 3 |

Ces valeurs correspondent à des verres relativement réfractaires qui peuvent donc avantageusement être employés dans des applications à hautes températures ou pour la construction d'éléments destinés à retarder la propagation d'un feu dans un bâtiment. Mais ce caractère réfractaire est en premier lieu au prix d'une température de fusion très élevée, supérieure par exemple à 1400°C, ce qui conduit souvent à utiliser des méthodes de fusion assez grossières, par exemple dans un cubilot avec du coke comme combustible, d'où un conditionnement thermique du verre souvent imprécis.

Avant d'en venir au comportement rhéologique, il faut de plus souligner que ces verres posent égalaient des problèmes particuliers de corrosion chimique et que le choix d'un verre donné doit également tenir compte de l'aspect corrosion des outils utilisés pour le fibrage. Avec des matériaux à base de silicium tels que ceux évoqués plus haut, on sait que le verre va avoir tendance à accentuer l'oxydation en silice. C'est pourquoi il est plus particulièrement avantageux d'utiliser des compositions verrières dont la teneur en silice est supérieure à 45 % et de préférence à 50 % et la teneur en fondants (MgO-CaO) inférieure à 20 % et de préférence à 15 % (composition qui se retrouve encore dans certains basaltes riches en silice mais qui reste particulièrement pauvre en silice si on la compare avec les verres courants donc d'un coût moindre que ceux-ci). Corollairement à cette teneur de silice encore relativement faible, on peut employer une faible teneur en alcalins, c'est-à-dire en fondants. Par ailleurs, la teneur en oxydants tels que les oxydes ferriques ou même ferreux et le soufre doit être aussi faible que possible de manière à avoir un verre aussi réducteur et acide que possible, donc ayant d'une part une faible tendance à solubiliser la silice en raison de son faible caractère basique et d'autre part ne favorisant pas l'oxydation en carbure de silicium qui est certes utile lorsqu'il s'agit de former une couche protectrice en surface mais qui est tout de même le résultat d'une attaque du centrifugeur qui ne doit pas progresser vers le coeur de celui-ci.

L'importance de ce dernier point ressort par exemple du test suivant. Un premier essai effectué avec un basalte à 45 % en silice et 12 % en oxyde ferrique a ainsi montré qu'un barreau en nitrure de silicium subissait une perte de poids de 80 % après 48 heures dans un bain de verre fondu à 1300°C, la perte de poids étant inférieur à 5 % après la même durée, pour un barreau identique plongé dans un bain de basalte en fusion répondant à une formulation identique au basalte de Meilleraie précité. Avec un verre "ordinaire" dont la teneur en silice est par exemple de 63 % et la teneur en $Na_2O$ de 15 %, on a observé une perte de poids inférieure à 5 % après 125 heures à 1100°C (température pour laquelle un verre "ordinaire" est déjà fluide qu'il est donc inutile de dépasser). Des résultats similaires sont obtenus avec des céramiques à base de carbure de silicium.

Les tests de corrosion montrent également qu'il est préférable d'utiliser des compositions verrières exemptes de soufre ou de tout composé tendant à augmenter leur basicité.

Venons-en maintenant au problème du fibrage à proprement dit. Quand on compare les courbes 2, 3 et 4 à la courbe 1, on constate immédiatement que les domaines de travail des verres basaltiques sont remarquablement étroits et qu'ils se situent à des niveaux de température bien plus élevés. Si on s'en tient à la limite théorique fixée par la température supérieure de dévitrification et en se fixant une viscosité minimum de 100 poises, seul le basalte de Meilleraie correspondant à la courbe 2 peut être utilisé et encore dans un domaine d'à peine 30°C (1330-1360°C).

En fait, cette limite n'en est réellement une que pour ce qui concerne le séjour du verre dans le centrifugeur car la vitesse de l'étirage - et du refroidissement qui s'opère alors sur la fibre - est telle qu'il est parfaitement possible d'étirer sans que la dévitrification ne puisse se produire. A ce propos, il peut être remarqué que le fibrage s'opère sur un verre en cours de refroidissement alors que la température supérieure de dévitrification est mesurée à partir d'un verre dévitrifié. Il n'y a donc pas une parfaite coïncidence des températures limites mais, pour autant, plus la température de travail est proche de la température supérieure de dévitrification et plus grand est le risque de ne pouvoir opérer. De toute façon, il est impératif que la viscosité adéquate soit obtenue à l'instant du fibrage et que le verre ne soit pas à une température inférieure à la température supérieure de dévitrification à l'intérieur du centrifugeur.

Le basalte de Meilleraie est le préféré selon l'invention, car outre son comportement rhéologique plus favorable, il est moins agressif pour les centrifugeurs céramiques.

Si on cherche à procéder au fibrage par centrifugation interne de l'un de ces verres basaltiques, dans des conditions habituelles pour un centrifugeur métallique donc avec une paroi pratiquement isotherme selon l'épaisseur, expérience qui peut être tentée avec un verre image, c'est-à-dire un verre dont la courbe viscosité-température est superposable au basalte choisi mais dont le domaine de formage est compris entre des températures notablement plus basses de façon à pouvoir opérer avec un centrifugeur métallique, on constate un phénomène de résolution en gouttes et non d'étirage en fibres.

Pour procéder néanmoins au fibrage d'une telle composition au moyen d'un centrifugeur percé, il est proposé selon l'invention et comme schématisé à la figure 2 d'opérer avec un gradient de température de l'intérieur vers l'extérieur de la paroi. On peut ainsi avec le basalte de Meilleraie, envoyer un jet de matériau fondu dans le cas représenté à 1470°C (le matériau est amené depuis l'enceinte de fusion par exemple au moyen d'une goulotte ce qui explique cette température assez basse par rapport à la température de fusion). Le verre continue de se refroidir lors de sa chute pour atteindre le centrifugeur.

Avec un centrifugeur dont la paroi interne est par exemple préchauffée autour de 1300°C, on va ainsi opérer avec un verre qui sera lui à une température de l'ordre de 1350°C qui exclut tout risque de dévitrification dans le centrifugeur et pour laquelle la fluidité du matériau est trop grande pour un étirage correct et amenerait à une résolution en gouttes et non fibres. Par contre, la paroi extérieure par laquelle émerge les filaments est à une température voisine de 1140°C correspondant à une viscosité permettant effectivement un étirage, soit exclusivement du fait de la force centrifuge soit avec l'action combinée de la force centrifuge et d'un étirage gazeux.

Plus généralement, le procédé selon l'invention permet le fibrage d'un très grand nombre de verres dont le comportement rhéologique est particulièrement critique du fait de l'étroitesse de leur domaine de travail, soit que celui-ci soit limité par des problèmes de dévitrification comme dans le cas des verres basaltiques soit qu'il le soit uniquement par les problèmes de viscosité lorsque cette dernière décroît de manière très grande avec la température. Par étroit, on entend par exemple un écart inférieur à 100°C voire à 50°C.

Pour mettre en oeuvre le procédé selon l'invention, les auteurs ont été amenés à développer un nouveau type de centrifugeur susceptible de fonctionner avec un gradient de température pouvant par exemple atteindre 200°C entre les parois interne et externe, encore qu'il doit être entendu que le centrifugeur selon la présente invention n'est nullement limité au cas de la mise en oeuvre du procédé de fibrage précité et qu'il peut également être utilisé dans des conditions plus isothermes, avec des compositions verrières moins réfractaires, et procurer néanmoins une série d'avantages qui seront répertoriés plus loin.

Pour établir un écart de températures important sur une épaisseur n'excédant pas par exemple 5 mm, il était indispensable d'opérer avec un matériau qui soit un très bon isolant thermique et ait une inertie thermique faible s'opposant à la diffusion de la chaleur. Une autre contrainte à partir du moment où le verre fondu doit traverser la paroi du centrifugeur est que cet isolant ne peut être déposé simplement sous la forme d'une couche mince de revêtement mais doit être utilisé pour réaliser l'ensemble de la pièce ; cette condition subordonne des conditions de faisabilité à la fois au niveau de la mise en forme des pièces et au niveau du perçage. De plus, le matériau doit être suffisamment réfractaire et supporter en continu des températures comprises par exemple entre 1200 et 1300°C et enfin dernière exigence mais non la moindre, le matériau doit être à même de résister à la corrosion par les verres.

Le premier type de matériau sélectionné est le nitrure de silicium par exemple du type RBSN (Reaction Bonded Silicum Nitrure, obtenu par frittage-réaction sous azote d'une poudre de silicium) du type $Si_3N_4$, ou du type SIALON, matériau fritté présentant de bonnes propriétés thermiques jusqu'à des températures voisines de 1300°C et qui est avantageusement relativement facile à usiner. Sa résistance mécanique à 1000°C est de 450 MPa et son coefficient de dilatation linéaire entre 20 et 1000°C de $3\ 10^{-6}\ C^{-1}$. La conductivité thermique de ce matériau est de 20 $Wm^{-1}\ °C^{-1}$ à 1000°C ce qui en fait un très bon isolant. De plus, ce matériau a une densité de l'ordre de 3,2, densité très faible associée à une faible diffusivité. La technique de frittage permet la réalisation de pièces même de formes assez complexes, les orifices pouvant être préparés dès le départ, en cru en les matérialisant par des baguettes retirées une fois la pièce en forme, le diamètre des orifices étant éventuellement rectifié au diamant.

Il est à noter que le matériau céramique utilisé présente une porosité très faible, sa densité apparente étant de préférence supérieure à 97 % de la densité théorique maximale. Cette condition dont il est assez simple de vérifier expérimentalement si elle est remplie constitue un test non destructif de la qualité de la pièce et est le signe d'une absence presque totale de défauts autorisant une bonne tenue au fluage et une bonne résistance à la flexion.

Très satisfaisant du point de vue de sa tenue au choc thermique et de sa dureté, le nitrure de silicium présente néanmoins une ténacité relativement faible (de l'ordre de 5,4 MPa $\sqrt{m}$) ce qui rend difficile la réalisation de centrifugeurs de grands diamètres, par exemple d'un diamètre de 400 mm ou plus, les centrifugeurs étant par définition entraînés à vitesse élevée, avec des accélérations centrifuges par exemple comprise entre 4000 et 20 000 $m/s^2$ si on se place dans les conditions avantageuses du point de vue de la qualité des fibres proposées par le brevet européen EP-B1- 91 381.

C'est pourquoi on utilise de préférence des céramiques composites avec une matrice en carbure de silicium renforcée par des fibres en carbure de silicium ou des fibres en carbone, céramiques dont les ténacités sont respectivement de l'ordre de 25-30 et 45-52 MPa $\sqrt{m}$, ces dernières valeurs se rapprochant beaucoup de celles des métaux. Ces céramiques composites ne présentent donc pratiquement plus le caractère fragile normalement caractéristique de ce type de matériau.

Ces composites sont obtenus par l'élaboration de préformes en formant des empilements aussi compactes que possible de couches de tissu en fibres de carbure de silicium ou de carbone. Le réseau de fibres subit ensuite une ou de préférence une série d'imprégnation par infiltration en phase vapeur, à haute température pour obtenir un craquage pyrolitique du précurseur ; le gaz précurseur employé étant typiquement du trichloro-methoxy-silane. Après cette mise en place de la matrice autour des fibres, l'ébauche est éventuellement usinée pour la finition et les orifices sont pratiqués par exemple par perçage laser.

La résistance mécanique de ces matériaux est d'autant plus remarquable qu'en lui-même le carbure de silicium est légèrement moins résistant que le nitrure de silicium ce qui explique que ce matériau n'ait pas été choisi pour la réalisation de pièces frittées. On a donc un composite de type fragile-fragile dont l'exceptionnelle résistance mécanique est due à la présence des fibres qui empêche la propagation des fissures, l'énergie du choc est dissipée par de multiples microfissures et absorbée par l'interface fibre-matrice, sans grande propagation des fissures primaires.

Pour une céramique SiC-SiC, les performances mécaniques sont les suivantes : résistance en tension 200 MPa à 1000°C, cette résistance étant limitée à 150 MPa à 1400°C d'où en pratique une température limite d'utilisation entre 1200-1300°C, module d'Young 200 GPa à 1000°C, 170 GPa à 1400°C, résistance à la compression dans l'épaisseur (perpendiculairement aux couches de tissu) 380-250 MPa, dans le plan des couches du tissu 480-300 MPa.

Avec une céramique SiC-C, on obtient des valeurs encore supérieures, données ici pour des températures respectivement de 1000 et 1400°C, résistance en traction 350 MPa (330 MPa), module d'Young 100 GPa (100 GPa), résistance à la compression - dans l'épaisseur 450 MPa (500 Mpa) et dans le plan 600 MPa (700 MPa).

Les pièces en céramique composite ne sont pas isotropes, leurs propriétés étant différentes selon qu'elles sont mesurées parallèlement ou perpendiculairement aux couches de tissu, celles-ci étant disposées parallèles à la paroi périphérique du centrifugeur, ce qui est d'autant plus avantageux dans le cadre de la mise en oeuvre du procédé selon l'invention que c'est justement dans l'épaisseur, perpendiculairement aux couches de tissu, que la conductivité thermique du matériau est la plus grande, le réseau fibreux ne pouvant jouer de rôle de conducteur thermique. A noter par contre que la plus grande conductivité thermique dans le plan des couches de tissu est plutôt avantageuse car elle aide à la non formation de gradients thermiques selon la hauteur de la bande.

Plus précisément, pour une teneur en fibres de 40 %, une céramique SiC-SiC présente pour une température comprise entre 1000 et 1400°C une diffusivité thermique constante de $5 \ 10^{-6} \ M^2 \ s^{-1}$ dans le plan parallèle aux couches du tissu et dans la direction perpendiculaire à ce plan de $2 \ 10^{-6} \ M^2 \ s^{-1}$. Le phénomène est encore plus accentué avec une céramique renforcée avec des fibres de carbone conductrices où la diffusivité thermique entre 1000 et 1400°C est respectivement de $7\text{-}8 \ 10^{-6} \ M^2 \ s^{-1}$ dans le plan parallèle et de $2 \ 10^{-6} \ M^2 \ s^{-1}$ dans l'épaisseur, la conductivité thermique étant de 17 WmK dans l'épaisseur et de 33 WmK dans le plan. Cette très faible diffusivité s'accompagne comme avec le nitrure de silicium de densité très faible et respectivement de 2,5 pour une céramique SiC-SiC et de 2,1 pour une céramique SiC-C, densité qui conduit à la réalisation de pièces très légères qui sont de ce fait plus facile à entraîner en rotation.

Mécaniquement et thermiquement, les céramiques SiC-C ont des performances supérieures à celles des céramiques SiC-SiC. Néanmoins, la réalisation de centrifugeurs en céramique tout carbure de silicium est plus simple, les fibres SiC mises à nu lors du perçage des orifices pouvant être mises en contact avec le verre fondu ce qui n'est pas le cas des fibres de carbone qui seraient transformées en dioxyde de carbone alors que les fibres de carbure de silicium sont érodées comme la matrice, avec cependant une cinétique de réaction de dégradation peut être un peu plus rapide en raison de la finesse des fibres, le carbure de silicium étant transformé en silicium qui constitue ensuite une couche protectrice. Pour utiliser une céramique SiC-C, il est donc nécessaire de procéder à un traitement de protection des orifices percés à travers la paroi, par exemple par une céramisation par du carbure de silicium ou autre céramique déposée en couche mince résistant à la corrosion par les verres.

On a schématisé à la figure 3 un montage complet d'un centrifugeur selon l'invention, dans ce cas particulier réalisé dans une céramique SiC-SiC. Par centrifugeur en céramique, on entend simplement la partie du centrifugeur susceptible d'être en contact avec le verre fondu ou directement en prise avec l'environnement gazeux à haute température. Toutes les autres pièces sont de préférence métalliques pour une question de coût et de faisabilité. La pièce en céramique proprement dite est donc constituée par une section torique 5, sous divisée en trois parties : la bande périphérique proprement dite 6, percée de par exemple 20 000 orifices dont le diamètre est compris par exemple entre 0,2-0,7 mm et de préférence autour de 0,5 mm pour un centrifugeur de 400 mm de diamètre, pour une hauteur de bande de l'ordre de 50 mm. La section torique 5 comporte également un revers 7 qui confère une bonne rigidité mécanique à la pièce et une portion plane 8 qui reçoit le filet de verre fondu 20 et où se constitue éventuellement une réserve de verre fondu. Cette portion 8 qui constitue donc le fond du centrifugeur est fixée à un moyeu 9 métallique selon un mode de fixation détaillé plus loin. Le schéma proposé n'est pas entièrement conforme à une pièce réelle dont les angles sont de préférence plus légèrement arrondis mais permet déjà de constater que les pièces selon l'invention sont avec des lignes assez pures, des éléments de renforts locaux n'étant ici pas nécessaires du fait de la dilatation pratiquement nulle de la pièce en céramique. Il n'est notamment pas nécessaire de prévoir comme dans le cas des centrifugeurs métalliques une partie inclinée en forme de "tulipe", les phénomènes de fluage n'étant pas observés, ou du moins ne conduisent pas à des déformations significatives.

Cet aspect des centrifugeurs en céramique selon l'invention est indépendant de la façon dont s'opère le fibrage et de la composition verrière utilisée et explique l'intérêt de ce nouveau type de centrifugeurs même avec un fibrage et une composition classique. On sait en effet que le fluage du centrifugeur métallique entraîne une modification des conditions de formation des fibres, les filaments étant par exemple émis à une distance plus rapprochée du brûleur d'étirage ; or toute modification des conditions de formation des fibres s'accompagne d'une légère modification de la qualité des fibres, par exemple une variation de leur diamètre, ce qui est considéré par le fabricant comme négatif car son objectif est généralement une parfaite constance de la qualité.

Par ailleurs, nous avons mentionné précédemment une hauteur de bande périphérique de l'ordre de 50 mm, toutefois cette hauteur peut être augmentée dans une assez large mesure. En effet, il s'agit là d'une hauteur qu'il est difficile d'outrepasser avec un centrifugeur métallique dans la mesure où pour alimenter tous les orifices, il serait nécessaire d'augmenter la force centrifuge, donc la vitesse de rotation du centrifugeur et corollairement les tensions qui s'exercent sur le centrifugeur avec à un certain niveau le dépassement de la limite élastique du matériau et des déformations irréversibles. Il est clair qu'avec un centrifugeur qui ne se déforme pas, la vitesse de rotation peut être augmentée de façon très importante. D'autant que les céramiques sélectionnées selon l'invention ont des densités très faibles et qu'elles exercent donc des efforts moindres sur les autres pièces, notamment sur l'arbre et le moyeu.

Pour conclure sur cet aspect fibrage traditionnel, on peut enfin remarquer que les centrifugeurs selon l'invention étant à même de supporter des températures plus élevées que les centrifugeurs métalliques, on peut également choisir de travailler avec des verres de composition ordinaire mais légèrement plus chaud donc plus fuide, en demandant moins d'énergie lors de l'étirage gazeux et en accentuant ainsi la part de la centrifugation dans l'étirage.

Revenons maintenant à la figure 3 et plus précisément au problème de la liaison entre le moyeu métallique 9 directement entraîné en rotation par l'arbre moteur 10 et le fond 8. La fixation doit tenir compte de trois impératifs : une liaison souple tenant compte de la différence de dilatation entre les pièces métalliques et céramiques, un centrage parfait du centrifugeur dont la vitesse périphérique est par exemple supérieure à 50 ms$^{-1}$ et de préférence comprise entre 50 et 90 ms$^{-1}$ pour reprendre les conditions avantageuses connues dans EP-B-91 866 et enfin ne jamais faire travailler une céramique en tension mais toujours en compression.

Ces impératifs sont satisfaits par exemple avec la liaison ici proposée mais bien évidemment d'autres schémas de montage peuvent également être employés dans la mesure où ils prennent bien en'considération les impératifs précités. Pour cela au moins trois logements oblongs 11 régulièrement espacés sont ménagés sur la face inférieure du fond 8. Ces logements oblongs sont occupés par des plots 12 également en céramique, frettés à chaud dans le moyeu métallique 9, le frettage permettant un positionnement extrêmement rigoureux. Ces plots se déplacent radialement lorsque le moyeu 9 se dilate et assurent ainsi un bon centrage du centrifugeur. De plus, le fond 8 est emprisonné par une bride métallique circulaire 13, fixée au moyeu 9 par exemple par des boulons 14, dans une fixation métal contre métal. Le jeu entre le fond 8 et la bride 13 d'une part, et le moyeu 9 d'autre part est comblé par un joint réfractaire qui maintient la partie céramique par pincement sans serrage, l'effort étant ainsi réparti sur une surface très grande. On peut utiliser pour ce faire un feutre en fibres d'alumine ou autres fibres réfractaires ; sont toutefois préférés des joints en graphite, notamment en papier graphite exfolié qui sont élastiques et peuvent ainsi suivre de façon réversible les déformations des pièces, le graphite peut être ici employé car enfermé dans un volume fermé sans renouvellement de l'air.

Le centrifugeur est environné par des brûleurs servant au préchauffage, au maintien en température et à la constitution d'une ambiance chaude et/ou de courants d'étirage gazeux longeant la paroi périphérique. La paroi interne de la bande périphérique est réchauffée par des brûleurs intérieurs 15 montés en couronne, ces brûleurs internes étant de préférence à jets divergents de façon à couvrir toute la hauteur de la paroi. La paroi externe est elle réchauffée par la lèvre 16 d'un brûleur annulaire 17. De plus, il peut être avantageux de disposer également d'une rampe mobile 18 de brûleurs externes employés hors du préchauffage et retirés dès que débute la coulée de verre fondu.

Le préchauffage est effectué en respectant une courbe de montée en température tenant compte de la résistance aux chocs thermiques de la céramique, une température de paroi au moins supérieure à 1000°C devant par exemple être atteinte avant que ne débute la coulée si on choisit de procéder au fibrage avec une température du centrifugeur comprise entre 1200 et 1300°C. Pour éviter l'apparition de gradients thermiques trop importants, ce préchauffage doit être effectué dans des conditions aussi isothermes que possible, vu dans des sections coupées selon l'épaisseur (donc parallèlement aux couches de tissu dans le cas d'une céramique composite) ; le problème ici posé est lié à la très faible diffusivité thermique des céramiques qui ne transmettent pratiquement pas la chaleur reçue en un point aux parties voisines. En raison de la présence des orifices par lesquels les gaz du brûleur se frayent localement un chemin au travers de la paroi, il est donc avantageux de préchauffer le centrifugeur et extérieurement et intérieurement, le chauffage intérieur débutant par exemple lorsqu'une température de 500-600°C est atteinte. Par ailleurs, le chauffage interne permet de minimiser les effets du refroidissement dû à la convection.

En phase de fibrage, le brûleur annulaire externe 17 doit être de préférence en mesure d'émettre des courants gazeux dont la température correspond à la température souhaitée pour la paroi externe de la bande périphérique et la vitesse est au moins égale à la vitesse périphérique du centrifugeur, soit pour reprendre l'exemple précité au moins égale à 50 ms$^{-1}$, ces courants émis essentiellement perpendiculairement aux filaments de verre concourent ainsi à leur étirage et les entraînent vers le dispositif de réception des fibres. Pour éviter qu'un certain nombre de filaments ne poursuivent leur course horizontale au-delà de la zone délimitée par ces courants gazeux, le dispositif de fibrage est complété en outre par une couronne de soufflage 21 émettant par une ouverture 19 des jets relativement plus véloces, à une température inférieure à la température requise pour un étirage gazeux et qui d'une façon bien connue de cet art cassent les filaments en fibres et impulsent leur chute vers la réception.

Avec une telle installation, il est possible de fibrer une gamme très étendue de verre, répondant à des compositions dont la teneur en silice peut osciller par exemple entre 50 et 70 % ce qui permet la réalisation d'une gamme très large de produits, l'emploi éventuel de roche naturelle sans ajout de soude et ceci avec une qualité de fibres au moins égale à la qualité courante des fibres obtenues par centrifugation interne.

De plus, le centrifugeur selon l'invention peut opérer avec un gradient de température selon l'épaisseur (donc perpendiculairement aux couches de tissu) pouvant atteindre par exemple 200°C, un tel écart permettant d'établir sans difficulté le profil de température préconisé à la figure 1, ce profil de température a ainsi permis de fibrer dans de bonnes conditions du basalte de Meilleraie dont la composition a été donnée plus haut. Les fibres de plus gros diamètres (30 et 35 microns) ont été obtenues avec une tirée de 30 kg par jour et par orifice, ceci avec une teneur en infibrés pratiquement nulle ce qui est particulièrement remarquable pour un verre basaltique. Les fibres de plus petits diamètres avec une tirée de 0,1 kg par jour et par orifice, et un verre dont la courbe viscosité-température correspond à la courbe 1, on a par ailleurs obtenu des fibres très fines d'un diamètre moyen de 1,75 microns. Toutes les autres valeurs intermédiaires sont susceptibles d'être obtenues en faisant varier la tirée par jour et par orifice entre les valeurs indiquées.

## Revendications

1. Procédé d'obtention de fibres minérales par centrifugation interne, selon lequel on déverse le matériau à fibrer à l'état fondu (20) à l'intérieur d'un centrifugeur dont la bande périphérique (6) est percée d'un très grand nombre d'orifices de sortie, **caractérisé en ce que** l'on maintient un gradient de température entre la paroi interne et la paroi externe de ladite bande périphérique (6).

2. Procédé d'obtention de fibres minérales selon la revendication 1, **caractérisé en ce que** l'écart de température entre les parois interne et externe est compris entre 50 et 300°C et de préférence entre 100 et 200°C.

3. Procédé d'obtention de fibres minérales selon la revendication 1, **caractérisé en ce que** l'écart de température entre les parois interne et externe est tel que la température interne est supérieure à la température pour laquelle le matériau à fibrer commence à dévitrifier et que la température extérieure est suffisamment basse pour que la viscosité du verre soit assez élevée au moment de l'étirage.

4. Procédé d'obtention de fibres minérales selon l'une des revendications précédentes, **caractérisé en ce que** la paroi interne et la paroi externe sont isothermes sur toute la hauteur de la bande périphérique.

5. Centrifugeur à utiliser dans la mise en oeuvre du procédé selon l'une des revendications 1 à 4, dont la bande périphérique est percée d'un très grand nombre d'orifices de sortie, **caractérisé en ce que** la bande périphérique présente une conductivité thermique inférieure à 20 W/m·°C à 1000°C et, de préférence, inférieure à 10 W/m·°C à 1000°C.

6. Centrifugeur selon la revendication 5, **caractérisé en ce que** la bande périphérique présente une diffusivité thermique inférieure à 5/10$^6$ M$^2$/s à 1000°C.

7. Centrifugeur selon l'une des revendications 5 ou 6, **caractérisé en ce que** la bande périphérique (6) est réalisée dans une céramique de nitrure de silicium fritté.

8. Centrifugeur selon l'une des revendications 5 ou 6, **caractérisé en ce que** la bande périphérique (6) est réalisée dans une céramique composite à matrice de carbure de silicium renforcée par des fibres de carbure de silicium.

9. Centrifugeur l'une des revendications 5 ou 6, **caractérisé en ce que** la bande périphérique (6) est réalisée dans une céramique composite à matrice de carbure de silicium renforcée par des fibres de carbone.

10. Centrifugeur selon la revendication 9, **caractérisé en ce que** le centrifugeur est muni d'une couche de protection à base de carbure de silicium.

11. Dispositif de fibrage pour la mise en oeuvre du procédé selon l'une des revendications 1 à 4, **caractérisé en ce qu'**il comporte un centrifugeur selon l'une des revendications 5 à 10 et des brûleurs internes et externes.

12. Dispositif selon la revendication 11, **caractérisé en ce que** les brûleurs internes (15) sont à jets divergents.

13. Dispositif de fibrage selon l'une des revendications 7 à 12, **caractérisé en ce que** la bande périphérique (6) du centrifugeur est fixée au moyeu (9) de l'arbre moteur par une bride métallique (13) et est centrée par des plots (12) en céramique frettés dans le moyeu (9) venant glisser dans des logements oblongs (11) ménagés dans ladite bande périphérique.

14. Application du procédé selon l'une des revendications 1 à 4 au fibrage d'un verre dont le domaine de travail à une largeur inférieure à 100°C.

15. Application du procédé selon l'une des revendications 1 à 4 au fibrage d'un verre dont le domaine de travail est au-dessus de 1100°C.

16. Application du procédé selon l'une des revendications 1 à 4 au fibrage d'un verre dont la teneur pondérale en silice est supérieure à 45 % et de préférence à 50 % et la teneur en chaux inférieure à 20 % et de préférence à 15 %.

17. Application du procédé selon l'une des revendications 1 à 4 au fibrage de verres basaltiques.

18. Application du procédé selon l'une des revendications 1 à 4 du basalte de Meilleraie.

19. Fibres de basalte obtenues par un procédé de fibrage selon l'une des revendications 1 à 4.

20. Fibres de basalte selon la revendication 19 ne comportant pas d'infibrés.

**Claims**

1. A method of obtaining mineral fibres by internal centrifuging, whereby the material to be drawn out into fibres is poured in the molten state (20) into the interior of a centrifuge the peripheral band (6) of which is pierced by a very large number of outlet orifices, characterized in that a temperature gradient is maintained between the inner wall and the outer wall of the said peripheral band (6).

2. A method of obtaining mineral fibres according to Claim 1, characterized in that the temperature differential between the inner and outer walls is between 50 and 300°C and is preferably between 100 and 200°C.

3. A method of obtaining mineral fibres according to Claim 1, characterized in that the temperature differential between the inner and outer walls is such that the internal temperature is greater than the temperature at which the material which is to be drawn into fibres starts to devitrify, and in that the outside temperature is sufficiently low for the viscosity of the glass to be fairly high at the moment of drawing.

4. A method obtaining mineral fibres according to any one of the preceding claims, characterized in that the inner wall and the outer wall are isothermal over the entire height of the peripheral band.

5. A centrifuge for use in the implementation of the method according to any one of Claims 1 to 4, the peripheral band of which is pierced by a very large number of outlet orifices, characterized in that the peripheral band has a thermal conductivity of less than 20 W/m°C at 1000°C and preferably less than 10 W/m°C at 1000°C.

6. A centrifuge according to Claim 5, characterized in that the peripheral band has a thermal diffusivity of less than $5/10^6$ $M^2/s$ at 1000°C.

7. A centrifuge according to Claim 5 or Claim 6, characterized in that the peripheral band (6) is made from a sintered silicon nitride ceramic material.

8. A centrifuge according to Claim 5 or Claim 6, characterized in that the peripheral band (6) is made from a composite ceramic material with a silicon carbide matrix reinforced by silicon carbide fibres.

9. A centrifuge according to Claim 5 or Claim 6, characterized in that the peripheral band (6) is made from a composite ceramic material with a silicon carbide matrix reinforced by carbon fibres.

10. A centrifuge according to Claim 9, characterized in that the centrifuge is provided with a silicon carbide-based protective coating.

11. A fibre-drawing device for implementing the method according to any one of Claims 1 to 4, characterized in that it comprises a centrifuge according to any one of Claims 5 to 10 and internal and external burners.

12. A device according to Claim 11, characterized in that the internal burners (15) are of the divergent jet type.

13. A fibre-drawing device according to any one of Claims 7 to 12, characterized in that the peripheral band (6) of the centrifuge is fixed to the hub (9) of the motor shaft by a metal flange (13) and is centred by ceramic studs (12) sweated into the hub (9) and sliding in oblong seatings (11) provided in the said peripheral band.

14. Application of the method according to any one of Claims 1 to 4 to the drawing-out of fibres of a glass having a working range less than 100°C in breadth.

15. Application of the method according to any one of Claims 1 to 4 to the drawing-out of fibres of a glass the working range of which is above 1100°C.

16. Application of the method according to any one of Claims 1 to 4 to the drawing-out of fibres of a glass of which the silica content is greater than 45% by weight and is preferably greater than 50% by weight, its lime content being less than 20% by weight and preferably less than 15% by weight.

17. Application of the method according to any one of Claims 1 to 4 to the drawing-out of fibres of basaltic glasses.

**18.** Application of the method according to any one of Claims 1 to 4 to Meilleraie basalt.

**19.** Basalt fibres obtained by a method of drawing out fibres according to any one of Claims 1 to 4.

**20.** Basalt fibres according to Claim 19 and containing no material which has not been drawn out into fibres.

**Patentansprüche**

**1.** Verfahren zur Herstellung von Mineralfasern durch innere Zentrifugierung, nach dem das zu zerfasernde Material (20) im geschmolzenen Zustand ins Innere eines Schleuderorganes gegossen wird, dessen Umfangswandung (6) mit einer sehr großen Anzahl von Austrittöffnungen versehen ist, dadurch gekennzeichnet, daß zwischen der Innenwand und der Außenwand der Umfangswandung (6) ein Temperaturgradient aufrechterhalten wird.

**2.** Verfahren nach Anspruch 1, dadurch gekennzeichnet, daß der Temperaturunterschied zwischen der Innenwand und der Außenwand zwischen 50 und 300 ° C und vorzugsweise zwischen 100 und 200 ° C liegt.

**3.** Verfahren nach Anspruch 1, dadurch gekennzeichnet, daß der Temperaturunterschied zwischen der Innenwand und der Außenwand derart ist, daß die Innentemperatur höher als diejenige Temperatur ist, bei welcher das zu zerfasernde Material zu entglasen beginnt, und daß die Außentemperatur ausreichend niedrig ist, damit die Viskosität des Glases im Augenblick des Ausziehens vergleichsweise hoch ist.

**4.** Verfahren nach einem der vorhergehenden Ansprüche, dadurch gekennzeichnet, daß die Innenwand und die Außenwand über die gesamte Höhe der Umfangswandung jeweils eine gleiche Temperatur aufweisen.

**5.** Schleuderorgan zur Verwendung bei der Anwendung des Verfahrens nach einem der Ansprüche 1 bis 4, dessen Umfangswandung mit einer sehr großen Anzahl von Austrittöffnungen versehen ist, dadurch gekennzeichnet, daß die Umfangswandung eine Wärmeleitfähigkeit von weniger als 20 W/m ° C bei 1000 ° C und vorzugsweise von weniger als 10 W/m ° C bei 1000 ° C besitzt.

**6.** Schleuderorgan nach Anspruch 5, dadurch gekennzeichnet, daß die Umfangswandung ein thermisches Diffusionsvermögen von weniger als $15/10^6$ $M^2$/s bei 1000 ° C besitzt.

**7.** Schleuderorgan nach einem der Ansprüche 5 oder 6, dadurch gekennzeichnet, daß die Umfangswandung (6) aus einer Keramik aus gesintertem Siliziumnitrid hergestellt ist.

**8.** Schleuderorgan nach einem der Ansprüche 5 oder 6, dadurch gekennzeichnet, daß die Umfangswandung (6) aus einer Verbundkeramik mit einer durch Siliziumkarbidfasern verstärkten Matrix aus Siliziumkarbid hergestellt ist.

**9.** Schleuderorgan nach einem der Ansprüche 5 oder 6, dadurch gekennzeichnet, daß die Umfangswandung (6) aus einer Verbundkeramik mit einer durch Kohlenstoffasern verstärkten Matrix aus Siliziumkarbid hergestellt ist.

**10.** Schleuderorgan nach Anspruch 9, dadurch gekennzeichnet, daß das Schleuderorgan mit einer Schutzschicht auf der Basis von Siliziumkarbid versehen ist.

**11.** Zerfaserungsvorrichtung für die Anwendung des Verfahrens nach einem der Ansprüche 1 bis 4, dadurch gekennzeichnet, daß sie ein Schleuderorgan nach einem der Ansprüche 5 bis 10 sowie Innen- und Außenbrenner aufweist.

**12.** Vorrichtung nach Anspruch 11, dadurch gekennzeichnet, daß die Innenbrenner (15) vom Typ mit divergierenden Strahlen sind.

**13.** Zerfaserungsvorrichtung nach einem der Ansprüche 7 bis 12, dadurch gekennzeichnet, daß die Umfangswandung (6) des Schleuderorgans durch einen Metallflansch (13) an der Nabe (9) der Antriebswelle befestigt ist und durch Klötzchen bzw. Nasen (12) aus Keramik zentriert ist, wobei die Nabe (9) auf bzw. an die Klötzchen wärmeaufgeschrumpft ist und diese in länglichen, in der Umfangswandung angebrachten Aufnahmen (11) gleiten.

**14.** Anwendung des Verfahrens nach einem der Ansprüche 1 bis 4 auf die Zerfaserung eines Glases, dessen Verarbeitungsbereich weniger als 100°C umfaßt.

**15.** Anwendung des Verfahrens nach einem der Ansprüche 1 bis 4 auf die Zerfaserung eines Glases, dessen Verarbeitungsbereich über 1100°C liegt.

**16.** Anwendung des Verfahrens nach einem der Ansprüche 1 bis 4 auf die Zerfaserung eines Glases, dessen Gewichtsanteil an Kieselsäureanhydrid mehr als 45% und vorzugsweise mehr als 50% beträgt, und dessen Kalkgehalt weniger als 20% und vorzugsweise weniger als 15% beträgt.

**17.** Anwendung des Verfahrens nach einem der Ansprüche 1 bis 4 auf die Zerfaserung von Basaltgläsern.

**18.** Anwendung des Verfahrens nach einem der Ansprüche 1 bis 4 auf Meilleraie-Basalt.

**19.** Basaltfasern, welche durch ein Zerfaserungsverfahren nach einem der Ansprüche 1 bis 4 hergestellt sind.

**20.** Basaltfasern nach Anspruch 19, welche keine unzerfaserten Partikel aufweisen.

FIG. 1

Log$_{10}$(n), n = VISCOSITE EN POISES

EP 0 484 211 B1

FIG. 2

1470°C

1300 - 1350

1100 - 1150°C

FIG. 3